# EUROPÄISCHE PATENTSCHRIFT

(11) **EP 1 431 125 B1**
(45) Veröffentlichungstag und Bekanntmachung des Hinweises auf die Patenterteilung: **09.08.2006**
(21) Anmeldenummer: 03029270.0
(22) Anmeldetag: 22.12.2003
(51) Int. Cl.: B60R 11/02

(54) **Trägersystem für Zusatz-Innenausstattung**
Support system for additional interior fitting
Système de support pour un agencement interieur additionel

(30) Priorität: 21.12.2002 DE 10260504
(43) Veröffentlichungstag der Anmeldung: 23.06.2004
(73) Patentinhaber: ADAM OPEL AG, 65423 Rüsselsheim (DE); Lear Corporation, Southfield, MI 48034 (US)
(72) Erfinder: Herbold, Gerhard, 55411 Bingen (DE); Kilburg, Claudia, 55239 Gau-Odernheim (DE); Lindström, Martin, 65193 Wiesbaden (DE); Polster, Michael, 65462 Ginsheim (DE); Stein, Volker, 65205 Wiesbaden (DE)
(74) Vertreter: Daniel, Ulrich W.P.

(56) Entgegenhaltungen:
- DE-A- 3 808 748
- DE-A- 19 808 381
- GB-A- 2 305 856
- US-A- 3 372 896

## Beschreibung

Die Erfindung betrifft ein Trägersystem zur mechanischen Verbindung einer austauschbaren Zusatz-Innenausstattung, insbesondere einer Mittelkonsole, zum Einsatz in einem Kraftfahrzeug umfassend einen Trägerrahmen und Befestigungsvorrichtungen mit Mitteln gegen unautorisiertes Lösen. Trägersysteme kommen üblicherweise überall dort zum Einsatz, wo eine zusätzliche Ausstattung mit einer Basiseinrichtung verbunden werden sollen.

Insbesondere kommen Trägersysteme in Kraftfahrzeugen zum Einsatz, bei denen ein Grundmodell mit verschiedener Innenausstattung zusätzlich bestückt werden kann. Es werden dabei verschiedene Arten von Zusatz-Innenausstattungen unterschieden. Zum einen kann die Zusatzinnenausstattung für den Nutzer so ausgebildet sein, dass diese sich von dem Benutzer leicht montieren und demontieren lässt. Zum anderen kann die Innenausstattung doch nur unter zur Hilfenahme von speziellen Werkzeugen durch autorisierte Werkstätten vorgenommen werden. Die Erfindung ist in erster Linie für vom Bediener oder Benutzer montierbare und demontierbare Zusatz-Innenausstattung gedacht. Ein typisches Beispiel für montierbare Zusatz-Innenausstattung ist ein Kindersitz, welcher entsprechend Alter, Gewicht und/oder Größe des Kindes variiert werden kann. Ein weiteres Beispiel für Zusatz-Innenausstattungen sind Mittelkonsolen, welche bislang fest eingebaut und nur von autorisierten Fachleuten auswechselbar sind.

Aus GB 2 305 856 A ist ein oberbegriffliches Trägersystem zur Verbindung von Kindersitzen auf der Rückbank im Fond eines Kraftfahrzeugs bekannt. Diese werden entweder an dem Gurtsystem oder mittels anderer Vorrichtungen mit dem Kraftfahrzeug verbunden.

Bei der bekannten Lösung tritt der Nachteil auf, dass der Kindersitz auf der Polsterung der Rücksitzbank aufliegt und dadurch einen Verschleiß der Sitz-Polsterung hervorruft. Zudem bieten derartige Trägersysteme lediglich eine mechanische Verbindung, nicht aber beispielsweise eine elektrische Verbindung.

Des Weiteren sind Mittelkonsolen, die sich im Bereich des Kraftfahrzeugtunnels befinden, bekannt. Bei den bekannten Mittelkonsolen tritt der Nachteil auf, dass diese nur von einem Fachmann mit Spezialwerkzeug zu montieren sind.

Es ist daher eine Aufgabe der vorliegenden Erfindung, ein Trägersystem und ein Verfahren zur mechanischen Verbindung von austauschbarer Zusatz-Innenausstattung und zur Bereitstellung einer elektrischen/elektronischen Schnittstelle zum Anschluss an eine Bordelektrik und/oder Bordelektronik eines Kraftfahrzeuges bereitzustellen, bei der praktisch kein Verschleiß insbesondere der Auflagefläche auftritt und welches sich von dem Benutzer ohne spezielles Werkzeug leicht montieren und demontieren lässt, wobei das Trägersystem für eine Vielzahl von Zusatz-Innenausstattungen ausgelegt ist.

Diese Aufgabe wird ausgehend von einem Trägersystem gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass das im Wesentlichen L-förmige Trägersystem im Bereich zwischen den äußeren Fondssitzen schwebend angeordnet ist, wobei das Trägersystem mindestens über eine hintere Befestigungsvorrichtung und mindestens über eine untere Befestigungsvorrichtung lösbar mit dem Kraftfahrzeug und die Zusatz-Innenausstattung über die obere Befestigungsvorrichtung mit dem Trägersystem verbunden ist.

Unter einem Trägersystem im Sinne der Erfindung wird im allgemeinen eine Vorrichtung zur Befestigung eines austauschbaren Zusatzteils mit einem Basisteil und im speziellen eine Befestigungsvorrichtung zur Befestigung von austauschbarem Zubehör und Zusatzausstattungen in einem Kraftfahrzeug verstanden. Die Anordnung des Trägersystems erfolgt über dem mittleren Fondsitz, damit eine Zugänglichkeit etwaiger auf dem Trägersystem angeordneter Zusatz-Innenausstattung von lateral gewährleistet ist. Das Trägersystem ist vorzugsweise L-förmig ausgebildet, damit es die Sitzkontur bis zum im Bodenbereich des Kraftfahrzeugs verlaufenden Tunnel optimal umschließt und auf dem Tunnel aufliegt, da in diesem die elektrische/elektronische Versorgung des Kraftfahrzeug-Zubehörs untergebracht ist, wobei das Trägersystem zwei Bereiche analog zu den zwei Schenkeln eines L's aufweist, die miteinander verbunden sind. Dabei können die zwei Bereiche fest oder auch lösbar miteinander verbunden sein. Das Trägersystem wird so montiert, dass zuerst die hintere Befestigungsvorrichtung mit den an dem Kraftfahrzeug angeordneten Adapter verbunden wird, wobei der Adapter zuerst noch eine Schwenkbewegung des Trägersystems zulässt und erst bei Erreichen der Endposition eine crash-sichere Verbindung entsteht. Nach dem Verschwenken des Trägersystems bei Erreichen der Endposition liegt das Trägersystem mit der unteren Befestigungsvorrichtung auf dem Tunnelsystem auf. Die untere Befestigungsvorrichtung ist dabei variabel gestaltbar. Bevorzugt ist die untere Befestigungsvorrichtung als ein Teil eines mehrteiligen Befestigungssystems ausgebildet, deren einer Teil mit dem erfindungsgemäßen Trägersystem verbindbar ist und der andere Teil mit dem Tunnelsystem des Kraftfahrzeugs verbindbar ist. Auf diese Weise lässt sich das Trägersystem leicht von Hand montieren. Zur Vermeidung von unautorisiertem Lösen des Trägersystems sind Sicherheitsvorrichtungen eingebaut, die insbesondere die Demontage während der Fahrt und bei installierter Zusatzinnenausstattung verhindern. Da das Trägersystem über dem Sitzpolster praktisch schwebt, entsteht ein Spalt zwischen Sitzpolster und Trägerrahmen. Zur Vermeidung von diesem Spalt zwischen der Sitzfläche und den tragenden Teilen des Trägersystems, sprich dem Trägerrahmen, ist die Abdeckung des Trägersystems so ausgebildet, dass diese etwaige Spalte verdeckt. Praktisch kein Verschleiß bedeutet im Sinne dieser Erfindung, dass ein Verschleiß aufgrund der die Sitzfläche kontaktierenden Abdeckung zwar über einen längeren Zeitraum auftreten kann, dieser aber so minimal ist, dass er nicht ins Gewicht fällt.

Diese Lösung bietet somit den Vorteil, dass aufgrund der schwebenden Anordnung des Trägersystems praktisch kein Verschleiß auftritt. Weiterhin lässt sich das Trägersystem aufgrund der Ausbildung der hinteren und der unteren Befestigungsvorrichtung leicht von dem Benutzer montieren und demontieren. Die Zusatz-Innenausstattung ist ohne großen Aufwand von dem Benutzer zu montieren und zu demontieren.

Eine vorteilhafte Ausbildung der Erfindung sieht vor, dass das Trägersystem über der mittleren Sitzfläche angeordnet ist. So lässt sich aufgrund der L-förmigen Ausprägung des Trägersystems dieses platzsparend über dem mittleren Fondssitz schwebend anordnen, ohne dass ein Benutzer vor der Montage den mittleren Fondssitz herausnehmen muss. Hierdurch bietet das erfindungsgemäße Trägersystem einen deutlichen Komfort-Vorteil und der Benutzer muss sich keine Gedanken machen, wo er einen herausnehmbaren Sitz unterbringen kann.

Allerdings kann es in einigen Fällen, zum Beispiel, falls eine extrem hochbauende oder voluminöse Zusatz-Innenausstattung installiert werden soll, vorteilhaft sein, den mittleren Sitz herauszunehmen, um weiteren Raum zur Unterbringung der Zusatz-Innenausstattung zu gewinnen. Aus diesem Grund ist es vorteilhaft, dass das Trägersystem anstelle des mittleren Sitzes angeordnet werden kann. Auch bei dauerhaft oder zumindest über einen längeren Zeitraum zu installierter Zusatz-Innenausstattung, bei denen auf einen mittleren Fondssitz verzichtet werden kann, bietet die Anordnung des Trägersystems anstelle eines mittleren Fondssitzes aufgrund des zusätzlichen Platzgewinns deutliche Komfort-Vorteile.

Einen weiteren Komfort-Gewinn erzielt man dadurch, dass das Trägersystem eine elektrische/elektronische Schnittstelle zum Anschluss einer Zusatz-Innenausstattung an die Bordelektrik und/oder Bordelektronik des Kraftfahrzeugs aufweist. Auf diese Weise lassen sich zusätzliche elektrische betriebene und/oder elektronische Zusatz-Innenausstattung installieren ohne auf mobile Energieversorgung, welche nur einen begrenzten Zeitraum der Energieversorgung ermöglicht angewiesen zu sein. So lassen sich beispielsweise Notebooks, DVD-Player oder andere Elektrogeräte komfortabel im Fonds des Kraftfahrzeugs installieren. Zwar bieten Kraftfahrzeuge zusätzliche Elektroversorgungen im Fonds eines Kraftfahrzeugs an, jedoch sind diese meist in Form von 12-V-Anschlüssen, die Zigarettenanzünderförmig ausgebildet sind und an ergonomisch ungünstig zu erreichenden Positionen angeordnet sind oder die Gesamtoptik des Fahrzeuginnenraums negativ beeinflussen.

Das erfindungsgemäße Trägersystem bietet weiterhin den Vorteil, dass die elektrische/elektronische Schnittstelle einen oberen und einen unteren Anschlussbereich aufweist, wobei der obere Bereich zur elektrischen/elektronische Verbindung der Schnittstelle mit einer Zusatz-Innenausstattung ausgebildet ist und der untere Bereich zur bodennahen elektrischen/elektronischen Verbindung mit der Bordelektrik/Bordelektronik ausgebildet ist. Die Elektroversorgung kann hierdurch in einer ergonomisch ungünstigen, aber das optische Erscheinungsbild des Kraftfahrzeuginnenraums nicht negativ beeinflussenden Lage angeordnet werden, denn durch das Trägersystem wird eine elektrische/elektronische Schnittstelle bereitgestellt, welche in einer ergonomisch günstigen Position für den Benutzer angeordnet ist. Dabei weist das Trägersystem vorzugsweise eine Einrichtung auf, mit der das Trägersystem mit einem einfachen Handgriff sowohl eine mechanische Verbindung als auch eine elektrische/elektronische Verbindung zu dem Kraftfahrzeug realisiert. Über ein Leitungssystem innerhalb des Trägersystems ist eine Verbindung des unteren Anschlussbereichs mit einem oberen Anschlussbereich realisiert. Die Zusatz-Innenausstattung kann also direkt im oberen Anschlussbereich an das Trägersystem angeschlossen werden, ohne dass Kabel im Innenraum des Kraftfahrzeugs lose umher liegen. Nicht zuletzt die obere Abdeckung des Trägersystems sorgt dafür, dass das die elektrische/elektronische Schnittstelle auch optisch den Gesamteindruck des Fahrzeuginnenraums nicht negativ beeinträchtigt

Aufgrund des für das Trägersystem nur in begrenztem Umfang zur Verfügung stehenden Bauraums ist das Trägersystem optimal an die Verhältnisse im Innenraum des Kraftfahrzeuges angepasst. Als optimale Ausbildung hat sich dabei eine L-förmige Ausbildung des Trägersystems ergeben. Vorzugsweise ist das L-förmige Trägersystem als liegendes "L" so in dem Kraftfahrzeug angeordnet, dass der kürzere Teil des Trägersystems im Wesentlichen in Richtung Fahrzeugboden weist und der längere Teil des Trägersystems im Wesentlichen parallel zur Sitzfläche der Fondsitze ausgerichtet ist. Es ist auch denkbar, dass beide Teile des Trägersystems gleich lang sind oder auch jedes beliebig andere Größenverhältnis zueinander aufweisen. Jedoch hat sich das vorstehend aufgeführte Größenverhältnis als optimal herausgestellt, da das Trägersystem so den Fahrzeuginnenraum bestmöglich ausnutzt.

Vorzugsweise weist die obere Abdeckung eines erfindungsgemäßen Trägersystems einen Randbereich und einen Innenbereich auf, wobei zumindest der Randbereich als Auflagefläche ausgebildet ist, in der die obere Befestigungsvorrichtung zur mechanischen Befestigung einer Zusatz-Innenausstattung an dem Trägersystem ausgebildet ist. Da das Trägersystem so ausgebildet ist, dass es für die verschiedensten Zusatz-Innenausstattung geeignet ist, ist neben einer oberen Befestigungsvorrichtung eine mit möglichst jeder Art von Zusatzausstattung kompatible Auflagefläche notwendig. Diesen Anspruch erfüllt eine Auflagefläche mit mehreren Bereichen, insbesondere mit einem Innen- und einem Randbereich, wobei die Bereiche auf Ebenen verschiedener Höhen angeordnet sein können, wodurch mehrere Auflagemöglichkeiten realisiert werden können. Um eine möglichst große Auflagefläche zu realisieren, die ausreichend Bauraum zur Ausgestaltung der Oberfläche, beispielsweise auf verschiedenen Ebenen, bereitstellt und die aufgrund der großen Auflagefläche eine geringe mechanische Belastung der Auflagefläche ermöglicht ist es vorteilhaft die obere Befestigungsvorrichtung, welche in der Auflagefläche angeordnet ist, an dem längeren Teil des Trägersystems unterzubringen.

Insbesondere ergibt sich ein Vorteil dadurch, dass die obere Befestigungseinrichtung auf einer Oberfläche des länglichen Teils des Trägersystems angeordnet ist, welche im Wesentlichen in Richtung Fahrzeugdach gerichtet ist. Diese Anordnung stellt eine leicht zugängliche Auflagefläche mit einer integrierten oberen Befestigungsvorrichtung bereit, so dass eine einfache Montage einer Zusatz-Innenausrüstung möglich ist.

Dementsprechend ergibt sich ein Vorteil daraus, dass die untere Befestigungsvorrichtung in einem Bereich des kürzeren Teils des Trägersystems angeordnet ist, welcher im Wesentlichen benachbart zum Fahrzeugboden angeordnet ist. Durch die im Wesentlichen in Verlängerung der oberen Befestigungsvorrichtung angeordneten unteren Befestigungsvorrichtung ergibt sich eine optimale Kraftleitung der von dem Gewicht einer Zusatz-Innenausstattung hervorgerufenen Kraft, welche über die obere Befestigungsvorrichtung, das Trägersystem und die untere Befestigungsvorrichtung in den Bodenbereich des Kraftfahrzeugs geleitet wird. Hierdurch ist ein mechanisch hoch belastbares Trägersystem realisiert.

Aufgrund der Anordnung der oberen und der unteren Befestigungsvorrichtung ergibt sich die Anordnung der hinteren Befestigungsvorrichtung zwangsläufig. Um das System stabil zu befestigen, ist es vorteilhaft, dass die hintere Befestigungsvorrichtung in einem Bereich des längeren Teils des Trägersystems angeordnet ist, welcher im Wesentlichen benachbart zur Rückenlehne der Fondsitze angeordnet ist.

Vorteilhaft ist es zudem, dass die obere Befestigungsvorrichtung als mindestens eine Ausnehmung in der Auflagefläche zur geführten Aufnahme der Zusatz-Innenausstattung ausgebildet ist, um mit der Ausnehmung korrespondierende Anbindungseinheiten der Zusatz-Innenausstattung aufzunehmen. Die Ausnehmungen müssen nicht alle gleichartig ausgeformt sein. So können die Ausnehmungen unterschiedlich ausgeformt sein, um evtl. die Gefahr einer fehlerhaften Montage auszuschließen. Die Ausbildung der oberen Befestigungsvorrichtung als Ausnehmung ist insbesondere deshalb geeignet, da hierdurch die Art der Anbindungseinheit in gewissen Grenzen variiert werden kann, um eine optimale Verbindung zu erzielen. Durch die Ausformung der oberen Befestigungsvorrichtung des Trägersystems als Ausnehmung weist das Trägersystem, welches auch ohne montierter Zusatzausrüstung in dem Kraftfahrzeug angeordnet sein kann, keine gefährlichen Erhebungen auf, welche beispielsweise im Falle eines Crashs oder Zusammenstoßes zu erheblichen Verletzungen führen können.

Von besonderem Vorteil ist es, dass die Ausnehmung der Auflagefläche als Schlitz ausgebildet ist, welche in einem ersten Bereich breiter ausgebildet ist, und in einem zweiten Bereich schmaler ausgebildet ist, um eine Zusatz-Innenausstattung mittels vertikalem Aufsetzen und horizontalem Verschieben aufzunehmen. Aufgrund dieser Ausbildung der Schlitze mit mehreren Bereichen lässt sich die Art der Montage vorgeben, wodurch eine Sicherheit gegen eine fehlerhafte Montage gegeben ist. Zudem wird durch die spezielle Form der Schlitze verhindert, dass für einen Kraftfahrzeugtyp ungeeignete Zusatzausstattung, sofort bei der Montage aufgrund inkompatibler Anbindungseinrichtungen montiert werden kann. Durch die Ausführung der Ausnehmung als Schlitz ist zudem eine kombinierte Montage aus vertikaler und horizontaler Bewegung notwendig, wodurch der Kombination Zusatz-Innenausstattung und Trägersystem zusätzlicher Verbindungshalt gegeben wird und eine ungewollte Demontage zusätzlich vermieden werden kann.

Eine weitere vorteilhafte Ausbildung der Erfindung sieht vor, dass die obere Befestigungsvorrichtung mindestens eine, bevorzugt zwei und besonders bevorzugt vier Ausnehmungen zur Aufnahme einer Zusatz-Innenausstattung aufweist. Mit Erhöhung der Anzahl der Befestigungsvorrichtungen steigt bis zu einem gewissen Grad auch die Sicherheit, beziehungsweise die Zuverlässigkeit der Verbindung. Sollte bei einem Crash eine der Vielzahl an oberen Befestigungsvorrichtungen versagen, kann deren Funktion durch die restlichen funktionstüchtigen oberen Befestigungsvorrichtungen kompensiert werden. Außerdem lässt sich mit einer höheren Anzahl an oberen Befestigungsvorrichtungen eine einfachere Positionierung und Ausrichtung der Zusatz-Innenausstattung vornehmen.

Eine weitere Ausführungsform der Erfindung sieht vor, dass der Innenbereich der Auflagefläche als Vertiefung ausgebildet ist, welche einen erhöhten Schnittstellenbereich aufweist, in dem eine elektrische/elektronische Schnittstelle zur elektrischen und/oder elektronischen Verbindung der Zusatz-Innenausstattung mit der Bordelektrik und/oder Bordelektronik ausgebildet ist. Aufgrund der Anordnung der Schnittstelle im Innenbereich entsteht ein Schutz für die meist empfindlichere elektrische/elektronisch Verbindung zwischen Zusatzausstattung und Trägersystem. Bei montierter Zusatzausstattung ist die Schnittstelle somit komplett von dem Trägersystem und der Zusatz-Innenausstattung umgeben, wodurch zum einen die Störanfälligkeit und eventuelle Beschädigungen der Schnittstelle vermieden werden und andererseits Störungen und Beschädigungen durch die Schnittstelle vermieden werden. Die Schnittstelle ist dabei so ausgebildet, dass eine Verbindung von Trägersystem und Zusatzausstattung nur bei vorschriftsmäßiger Montage erfolgen kann. So bietet die Anordnung der Schnittstelle eine zusätzliche Sicherheitsfunktion. Die Anordnung der Schnittstelle innerhalb eines vertieften Innenbereichs bietet unter anderem den Vorteil, dass das Trägersystem nicht so raumgreifend baut und die Schnittstelle insbesondere bei unmontierter Zusatzausstattung besser geschützt ist.

Vorteilhaft ist es weiterhin, dass der durch den vertieften Innenbereich und den erhöhten Randbereich und/oder den erhöhten Schnittstellenbereich definierte Absatz mit einer entsprechenden Rastvorrichtung der Zusatz-Innenausstattung zusammenwirken kann und somit als Sicherungseinheit oder Sicherheitsvorrichtung gegen unautorisiertes Abnehmen der Zusatz-Innenausstattung von dem Trägersystem fungiert. Auf diese Weise lässt sich der so ausgebildete Absatz hervorragend für weitere, an der Zusatzausstattung angeordnete Sicherheitsvorrichtung nutzen, indem die Sicherheitsvorrichtung der Zusatzausstattung und der Absatz zusammenwirken. Hierdurch wird die Kombination aus Trägersystem und Zusatzausstattung noch sicherer und zuverlässiger verbunden.

Eine vorteilhafte Weiterbildung des Trägersystems sieht vor, dass die untere Befestigungsvorrichtung auf den Bodenbereich eines Kraftfahrzeuges im Fußraum des Kraftfahrzeuges aufsetzbar ist und mit diesem über einen Hebelmechanismus verbindbar ist, so dass eine mechanische Verbindung und/oder eine Verbindung mit der Bordelektrik und/oder Bordelektronik zustande kommt. Zudem erhält man insbesondere eine Vorteil dadurch, dass der Bodenbereich eines Kraftfahrzeuges, auf dem die untere Befestigungsvorrichtung aufsetzbar ist, eine Tunnelsystem eines Kraftfahrzeuges ist. Die untere Befestigungsvorrichtung kann dabei einteilig als fester Bestandteil des Trägersystems ausgebildet sein, oder mehrteilig als mit dem Trägersystem und dem Tunnelsystem verbindbare untere Befestigungsvorrichtung ausgebildet sein. Die untere Befestigungsvorrichtung ist dabei vorzugsweise so ausgebildet, dass mit einer Hebelbetätigung sowohl eine mechanische Verbindung als auch eine elektrische/elektronische Kontaktierung des Trägersystems mit der Tunnelelektrik/- elektronik zustande kommt. Mit einer derartigen unteren Befestigungsvorrichtung ist eine einfache Handhabung des Trägersystems insbesondere eine einfache Montage mit wenigen Handgriffen durch den Benutzer möglich.

Es ist von besonderem Vorteil, dass die untere Befestigungsvorrichtung eine Sicherungsvorrichtung aufweist, die ein unautorisiertes Lösen des Trägersystems verhindert. Vorzugsweise ist die Betätigung der Sicherheitsvorrichtung so ausgebildet, dass eine versehentliche Betätigung ausgeschlossen ist. Die Sicherheitsvorrichtung verhindert dabei insbesondere ein Lösen des Trägersystems mit verbundener Zusatz-Innenausstattung. Die Sicherheitsvorrichtung kann eine Anzeige aufweisen, welche Auskunft über den Status der Verriegelung gibt. Dieser Anzeige kann beispielsweise auch über die Bordelektronik auf Instrumententafeln innerhalb des Fahrzeugs angezeigt werden. Denkbar ist auch, dass über die Bordelektronik diese Sicherheitsvorrichtung betätigt, das heißt verriegelbar oder entriegelbar ist.

Weiterhin vorteilhaft ist es, dass die Sicherungsvorrichtung als ein federndes Element mit einer als Sperre ausgeformten Erhebung ausgebildet ist. Diese Ausbildung erlaubt es, eine hocheffiziente aber einfach aufgebaute Sicherheitsvorrichtung auf kleinsten Raum in der vorderen Abdeckung auszubilden. Es können auch zwei oder mehrere Sicherheitsvorrichtungen ausgebildet sein, wodurch eine zusätzliche Sicherheit gegen unautorisiertes oder unbeabsichtigtes Lösen gewährleistet ist. Die Sicherheitsvorrichtungen können jeweils unterschiedlich ausgebildet sein. So ist eine Kombination eines federnden Elementes und jeder anderen Ausführungsform durchaus denkbar.

Zudem erzielt man einen Vorteil dadurch, dass die hintere Befestigungsvorrichtung über eine Einhakvorrichtung nach Art einer Schlossfalle mit seitlich an dem mittleren Fondssitz befindlichen Bolzen verbindbar ist. Auf diese Weise lässt sich eine einfach zu realisierende Befestigung erzielen, die einfach zu montieren ist und bei der die Befestigung in einem für den Fahrgast nicht sichtbaren Bereich erfolgt. Die Befestigungsvorrichtung ragt dabei in den Sitzbiss bzw. in den Trennbereich der Fondsitze hinein, so dass keinerlei störende Bauteile der Befestigungsvorrichtung in den Fondsraum ragen.

Eine vorteilhafte Ausgestaltung der Erfindung sieht vor, dass die hintere Befestigungsvorrichtung mindestens zwei Lagerflächen zur Verbindung mit zwei Haltevorrichtungen aufweist, wobei die hintere Befestigungsvorrichtung so ausgebildet ist, dass bei waagerechter Position des Trägersystems die hintere Befestigungsvorrichtung mit dem Kraftfahrzeug verbunden ist, und dass bei geneigter Position des Trägersystems zur Sitzfläche das Trägersystem lösbar ist.

Vorzugsweise ist das Trägersystem so ausgebildet, dass die hintere Befestigungsvorrichtung mit dem Trägerrahmen verbunden ist. Auf diese Weise lässt sich eine stabile Verbindung realisieren. Die Energie, die zum Beispiel bei einem Aufprall freigesetzt wird, wird dadurch optimal durch die stabilsten Bauteile des Trägersystems abgeleitet.

Weiterhin vorteilhaft ist es, dass die hintere Befestigungsvorrichtung über einen Adapter, welcher mit dem Kraftfahrzeug verbunden ist, verbindbar ist. Nicht in jedem Kraftfahrzeug sind seitlich an dem Mittelsitz im Fonds angeordnete Bolzen zur Befestigung der hinteren Befestigungsvorrichtung vorhanden. Um dennoch das Trägersystem in bereits auf dem Markt verfügbaren Kraftfahrzeugen ein zusetzten, ist es vorteilhaft, dass die hintere Befestigungsvorrichtung über einen leicht nachrüstbaren Adapter mit dem Kraftfahrzeug verbindbar ist.

Vorteilhaft ist es dabei, dass der Adapter mit der hinteren Befestigungsvorrichtung nach Art eines Schlosssystems ausgebildet ist. Auf diese Weise lässt sich sicherstellen, dass eine sichere und zuverlässige Befestigung gewährleistet ist.

Vorzugsweise weist der Adapter mindestens einen Profilrahmen, mindestens eine Lasche und mindestens ein Verbindungsstück zur Verbindung des Adapters mit dem Kraftfahrzeug, insbesondere mit der Karosserie des Kraftfahrzeugs, auf. Der Profilrahmen sorgt bei diesem Aufbau für die notwendige Stabilität. Über das Verbindungsstück wird eine sichere Verbindung zwischen Adapter und Kraftfahrzeug realisiert. Schließlich dient die Lasche zum sicheren und zuverlässigen Verbinden der hinteren Befestigungsvorrichtung mit dem Adapter. Mit diesem Aufbau lässt sich ein einfacher, leicht herzustellender Aufbau, der dennoch die strengen Anforderungen des TÜV's oder anderer für die Sicherheit von Kraftfahrzeugen und Zubehör zuständigen Institutionen sowie Normen und Richtlinien erfüllt.

Das Verbindungsstück ist vorteilhafter Weise lösbar über eine Schraubenverbindung mit dem Kraftfahrzeug verbindbar. So lässt sich der Adapter beliebig austauschen und für den Fall eines Verschleißes, beispielsweise nach einem leichteren Crash, leicht ersetzen. Zudem ist es vorteilhaft, dass alternativ das Verbindungsstück unlösbar über beispielsweise eine Umformverbindung mit dem Kraftfahrzeug verbindbar ist. Auf diese Weise lässt sich eine dauerhafte Verbindung des Adapters realisieren, welche bei entsprechender Auslegung der Bauteile des Adapters für eine längerfristige Nutzung ausgebildet ist.

Diese unlösbare Verbindung ist in einer besonderen Ausführungsform so ausgestaltet, dass das Verbindungsstück unlösbar mit dem Kraftfahrzeug verschweißt ist. Über diese Verbindung lassen sich auf das Trägersystem einwirkende Kräfte problemlos auf das Kraftfahrzeug übertragen, wobei die Verbindung zuverlässig und einfach herzustellen ist.

Die hintere Befestigungsvorrichtung ist bei einer erfindungsgemäßen Ausführungsform so ausgebildet, dass diese bei montiertem Trägersystem in den zwischen einem unteren Bereich einer Polsterung einer Rückenlehne und einem hinteren Bereich einer Polsterung einer korrespondierenden Sitzfläche geformten Spalt ragt. So ist neben der besseren Optik auch gewährt, dass evtl. Metallteile, die beispielsweise im Falle eines Crashs zu zusätzlichen Verletzungen der Fahrzeug-Insassen führen könnten, durch die Polsterung von dem Innenraum getrennt sind und so ein besserer Insassenschutz entsteht.

Eine weitere Ausführungsform sieht vor, dass der Trägerrahmen eine in den Trägerrahmen integrierte Energieabsorptionseinrichtung umfassend ein Profilblech mit einem deformierbaren Bereich aufweist, wobei die hintere Befestigungsvorrichtung an der Energieabsorptionseinrichtung angeordnet ist. Da der Trägerrahmen des Trägersystems aufgrund des begrenzt zur Verfügung stehenden Bauraums nicht beliebig groß dimensioniert werden kann, dass er sämtliche auftretenden Energiemengen ohne Versagen ableiten kann, ist es eine die Erfindung verbessernde Maßnahme, dass ein zusätzlicher Energieabsorptionsrahmen in das Trägersystem, günstiger Weise in den Trägerrahmen integriert ist. Die Energieabsorptionseinrichtung ist dabei so ausgebildet, dass diese bei Überschreiten einer gewissen, auf das Trägersystem einwirkenden, Energiemenge die Energiemenge durch plastische Deformation absorbiert.

Von Vorteil ist, dass der deformierbare Bereich der Energieabsorptionseinrichtung einen Schlitz mit einer Ausnehmung, welche eine größere Breite als der Schlitz aufweist, am Schlitzende aufweist, wobei in die Ausnehmung zur Aufnahme eines Bolzens ausgebildet ist. Durch den Schlitz kann die Richtung in der die Energieabsorption wirken soll vorbestimmt werden. Auf diese Weise wird die Energie gezielt abgeleitet, ohne dass es beispielsweise zu ungeplanten Absplitterungen kommt, welche ein zusätzliches Gefahrenpotential für die Kraftfahrzeuginsassen bilden.

Einen weiteren Vorteil erzielt man dadurch, dass die Energieabsorptionseinrichtung mit dem Trägerrahmen über eine Bolzenverbindung verbunden ist, wobei der Bolzen in der größeren Ausnehmung des Schlitzes so angeordnet ist, dass bei einem Crash der Bolzen den Schlitz aufweitet und deformiert und somit die Energie des Crashs absorbiert. Diese Anordnung bietet den Vorteil, dass diese Energieabsorptionseinrichtung einfach zu realisieren ist und leicht mit dem Trägerrahmen montierbar ist.

Eine weitere Ausführungsform der Erfindung sieht vor, dass die elektrische/elektronische Schnittstelle elektrische Leitungen zur Verbindung der elektrischen Schnittstelle mit der Bordelektronik und/oder Bordelektrik aufweist. Auf diese Weise lässt sich die Schnittstelle an beliebigen Positionen des Trägersystems anordnen, ohne dass eine örtliche Nähe zum Tunnel, welcher die Bordelektrik/Bordelektronik umgibt, notwendig ist. Hierdurch lassen sich elektrische/elektronische Anschlüsse ergonomisch für den Fahrgast im Innenraum an dem Trägersystem anordnen.

Zudem sieht eine vorteilhafte Ausführungsform der Erfindung vor, dass mindestens eine Abdeckung mit der Sitzfläche, der Rückenlehne und dem Tunnel des Kraftfahrzeuges abschließt. Da das Trägersystem schwebend über dem mittleren Fondsitz angeordnet ist, würde sich ohne eine erfindungsgemäße Abdeckung ein auch optisch unschöner Spalt zwischen Trägersystem und Polsterung bilden. Durch diesen Spalt können in die Polsterung ungewollt Teile eindringen und so zu Fehlfunktionen führen. Zudem könnten sich Fahrzeuginsassen beispielsweise Finger in diesem Spalt klemmen. Deshalb bieten die Abdeckungen einen vorteilhaften Schutz.

Eine zweite Aufgabe ist es, ein Verfahren bereit zu stellen, welches dem Benutzer von Kraftfahrzeugen es ermöglicht, ein erfindungsgemäßes Trägersystem auf einfache Weise und mit wenigen Handgriffen und ohne Spezialwerkzeug mit einem Kraftfahrzeug zu verbinden.

Diese Aufgabe wird ausgehend von einem Verfahren zur Verbindung eines Trägersystems gemäß dem Oberbegriff des Anspruchs 26 in Verbindung mit dessen kennzeichnenden Merkmalen gelöst. Vorteilhafte Weiterbildungen der Erfindung sind in den abhängigen Ansprüchen angegeben.

Die Erfindung schließt die verfahrens-technische Lehre ein, dass das Verfahren zur crash-sicheren Befestigung eines Trägersystems mit einem Kraftfahrzeug und Verbinden des Trägersystems mit einem vorhandenen Elektrik/Elektronik-System die folgenden Schritte umfasst: Positionieren einer hinteren Befestigungsvorrichtung und Verbinden mit einem Adapter und Betätigen einer unteren Betätigungsvorrichtung zur Verbindung mit einem Anschlussteil zur Kopplung an das Elektrik/Elektronik-System, insbesondere mit einem Kraftfahrzeug, bevorzugt mit einem Tunnelsystem eines Kraftfahrzeuges.

Vorteilhaft hieran ist, dass der Benutzer durch einfaches Aufsetzen des Trägersystems und Betätigung einer Betätigungseinrichtung ein erfindungsgemäßes Trägersystem ohne Verwendung von Spezialwerkzeug einfach und schnell montieren kann.

Weiter vorteilhaft ist, dass das Positionieren einer hinteren Befestigungsvorrichtung und Verbinden mit einem Adapter die folgenden Schritte umfasst: Auflegen der hinteren Befestigungsvorrichtung in winkliger Orientierung zu einer durch eine Sitzfläche eines Fondssitzes gebildeten, im Wesentlichen horizontalen Ebene auf eine erste Befestigungseinheit eines Adapters, Verschieben der hinteren Befestigungsvorrichtung über die erste Befestigungseinheit bis zu einem ersten Anschlag und Verschwenken der hinteren Befestigungsvorrichtung in eine im Wesentlichen horizontale Orientierung bis zu einem zweiten Anschlag. Durch die beiden Anschläge kann der Benutzer zum einem die aufzuwendende Kraft reduzieren, in dem er das Trägersystem auf die Befestigungseinheit ablegen kann und das Trägersystem entlang dieser Befestigungseinheit verschieben kann und zum anderen, dass durch die Anschläge eine einfache Bedienung ohne schwierige Positionierung erfolgen kann.

Zudem ist es vorteilhaft, dass das Betätigen einer Betätigungsvorrichtung zur Befestigung einer unteren Befestigungsvorrichtung die Schritte umfasst: mechanische Verbindung und elektrische/elektronische Verbindung an ein Tunnelsystem eines Kraftfahrzeuges, wobei die mechanische und die elektrische/elektronische Verbindung mit einem einzigen Betätigungsvorgang realisiert werden. Hierdurch muss der Benutzer keine schwierige Zwangslage zur sicheren und zuverlässigen Montage des Trägersystems einnehmen, sondern er kann bequem und ergonomisch mit einem Handgriff gleichzeitig eine elektrische/elektronische Verbindung sowie eine mechanische Verbindung herstellen.

Weitere die Erfindungen verbessernde Maßnahme sind in den Unteransprüchen angegeben oder werden nachstehend gemeinsam mit der Beschreibung mehrerer bevorzugter Ausführungsbeispiele der Erfindung anhand der Figuren näher dargestellt. Es zeigt:
- Fig. 1: eine perspektivische Ansicht eines erfindungsgemäßen Trägersystems;
- Fig. 2: eine perspektivische Ansicht eines zweiten erfindungsgemäßen Trägersystems;
- Fig. 3: ein Ausschnitt einer Draufsicht auf ein erfindungsgemäßes Trägersystem;
- Fig. 4: eine Vorderansicht eines erfindungsgemäßen Trägersystems;
- Fig. 5: einen Längsschnitt eines erfindungsgemäßen Trägersystems in Seitenansicht;
- Fig. 6: eine perspektivische Ansicht eines Trägerrahmens mit Energieabsorptionseinrichtung und hinterer Befestigungsvorrichtung;
- Fig. 7: eine perspektivische Ansicht einer Energieabsorptionseinrichtung eines erfindungsgemäßen Trägersystems;
- Fig. 8: eine perspektivische Ansicht eines Adapters eines erfindungsgemäßen Trägersystems;
- Fig. 9: einen Ausschnitt in perspektivischer Ansicht eines erfindungsgemäßen Trägersystems und
- Fig. 10: die Montage der hinteren Befestigung des Trägersystems an einem Adapter in Seitenansicht.

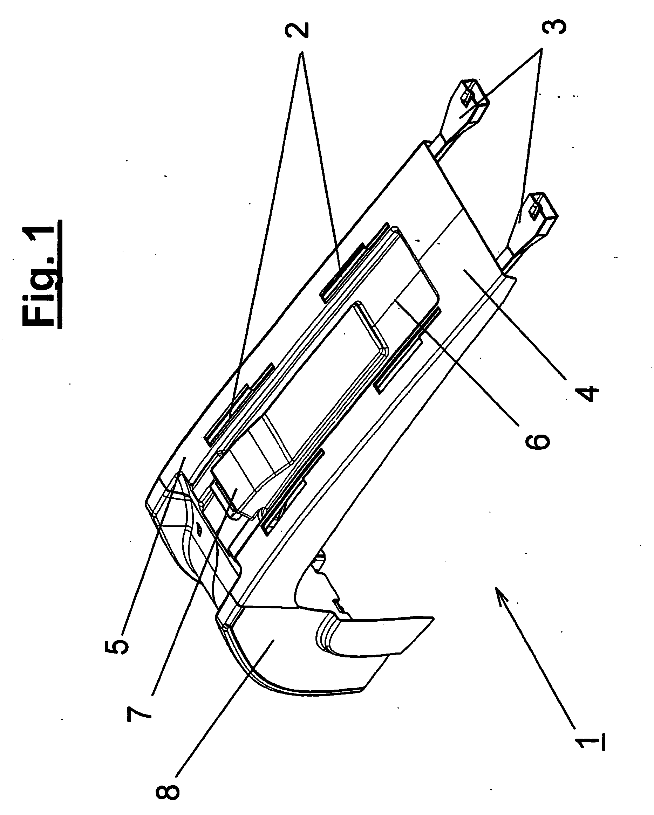

Fig. 1 zeigt in einer perspektivischen Ansicht ein erfindungsgemäßes Trägersystem 1, welches drei Befestigungsvorrichtungen, eine obere Befestigungsvorrichtung 2 zur Befestigung einer Zusatz-Innenausstattung und zwei Befestigungsvorrichtungen, eine untere (hier nicht dargestellt) und eine hintere Befestigungsvorrichtung 3, zur Befestigung des Trägersystems 1 mit einem Grundmodell, in dem hier vorliegenden Fall zur Befestigung mit einem Kraftfahrzeug. Das Trägersystem 1 weist vier oberer Befestigungsvorrichtungen 2 auf, die als Schlitze in der oberen Auflagefläche 4 der oberen Abdeckung 5 ausgeformt sind, damit eine Zusatz-Innenausstattung mit entsprechend ausgebildeten, korrespondierenden Befestigungsvorrichtungen, die in die Schlitze eingreifen können, mit diesen zusammenwirken kann. Die Schlitze weisen dabei einen breiteren und einen schmaleren Bereich auf. Der breitere Bereich dient zum im Wesentlichen vertikalen Aufsetzen der Zusatz-Innenausstattung, welche dann durch ein im Wesentlichen vertikales Verschieben entlang der Auflagefläche 4 mit dem Trägersystem 1 verbunden wird. Die Auflagefläche 4 weist einen vertieften Innenbereich 6 auf, der zusammen mit einer in dem Innenbereich 6 erhöht angeordneten elektrischen/elektronischen Schnittstelle 7 und der Auflagefläche 4 einen Absatz bildet, welcher mit einer Verriegelungsvorrichtung der Zusatz-Innenausstattung zusammenwirkt. Die elektrische/elektronische - kurz elektr. - Schnittstelle 7 des im Wesentlichen L-förmig aufgebauten Trägersystems 1 dient zur elektr. Versorgung der Zusatz-Innenausstattung. Weiterhin weist das Trägersystem 1 nach Fig. 1 eine vordere Abdeckung 8 auf, welche zugleich das Trägersystem 1 gegen die Umgebung begrenzt und dadurch einen Schutz bietet und zusammen mit der oberen Abdeckung die Optik des gesamten Trägersystems 1 bestimmt. Die hintere Befestigungsvorrichtung 3 umfasst zwei in montiertem Zustand in den Sitzbiss des Kraftfahrzeugs ragende Einrichtungen, welche zusammen mit mindestens einem an dem Kraftfahrzeug angeordneten Adapter (hier nicht dargestellt) zusammenwirken und eine mechanische Verbindung realisieren. Die Verbindung ist dabei so zuverlässig, dass das Trägersystem 1 einem Kraftfahrzeug Crash entsprechend den geltenden Vorschriften Stand hält.

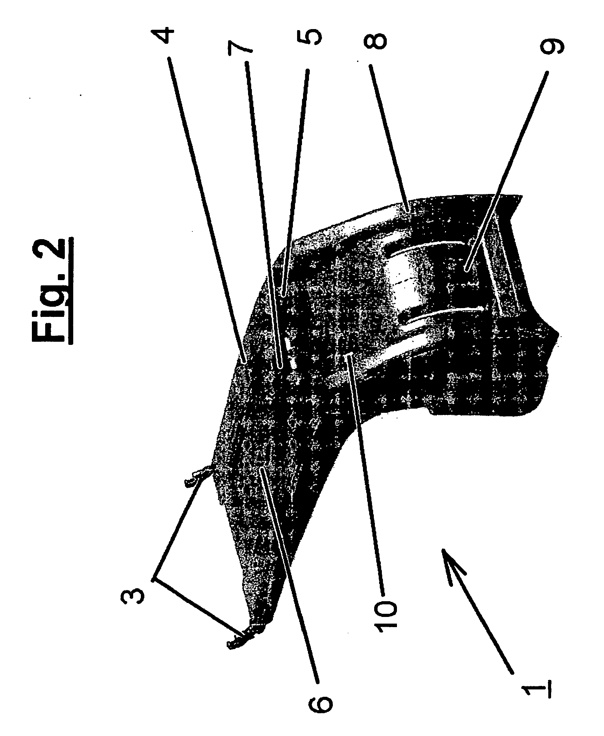

Fig. 2 zeigt eine andere Variante eines erfindungsgemäßen Trägersystems 1 in einer anderen perspektivischen Ansicht, wobei sich die in Fig. 2 dargestellte Variante alleine durch die unterschiedlich ausgeformte hintere Befestigungsvorrichtung 2 unterscheidet. Die vordere Abdeckung 8 weist zwei schlitzförmige Ausnehmungen auf, welche zur Führung eines in den Ausnehmungen angeordneten Bedienelements (nicht dargestellt) dienen. Dieses Bedienelement wird durch eine Sicherheitsvorrichtung 9, welche ein federndes Element mit einer als Nase ausgebildeten Erhöhung umfasst, gegen unautorisiertes Lösen des Trägersystems 1 gesichert. Zudem umfasst die Sicherheitsvorrichtung ein Element, welches durch die Öffnung 10 geführt werden kann, und so nur ein Öffnen bei demontierter Zusatz-Innenausstattung zulässt.

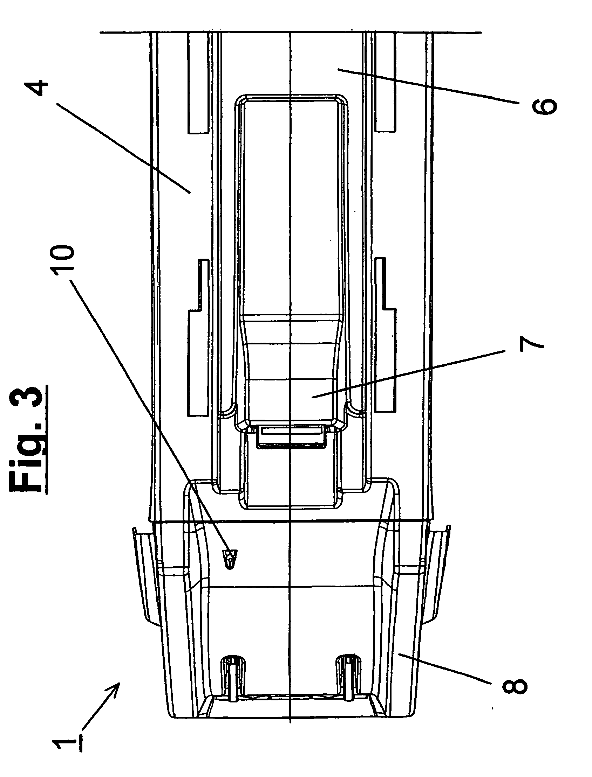

In Fig. 3 ist ein Ausschnitt einer Draufsicht auf ein erfindungsgemäßes Trägersystem 1 dargestellt. Deutlich sind hier die beiden Abdeckungen 5, 8 zu erkennen. Insbesondere lässt sich auch gut die Öffnung 10 zur Führung einer Sicherheitsvorrichtung erkennen, welche in der vorderen Abdeckung 8, die in der Ansicht im linken Bereich dargestellt ist, ausgebildet ist. Die im rechten Bereich der Darstellung dargestellte obere Abdeckung 5 weist erfindungsgemäß eine Ablagefläche 4 auf, in der eine obere Befestigungsvorrichtung 2 in Form von vier Schlitzen ausgebildet ist, welche einen breiteren und einen schmaleren Bereich aufweisen. Die Auflagefläche 4 umgibt einen vertieft angeordneten Innenbereich 6, welcher eine elektr. Schnittstelle 7 aufweist. Die in Fig. 3 dargestellten Abdeckungen 5, 8 sind vorzugsweise aus Kunststoff gefertigt.

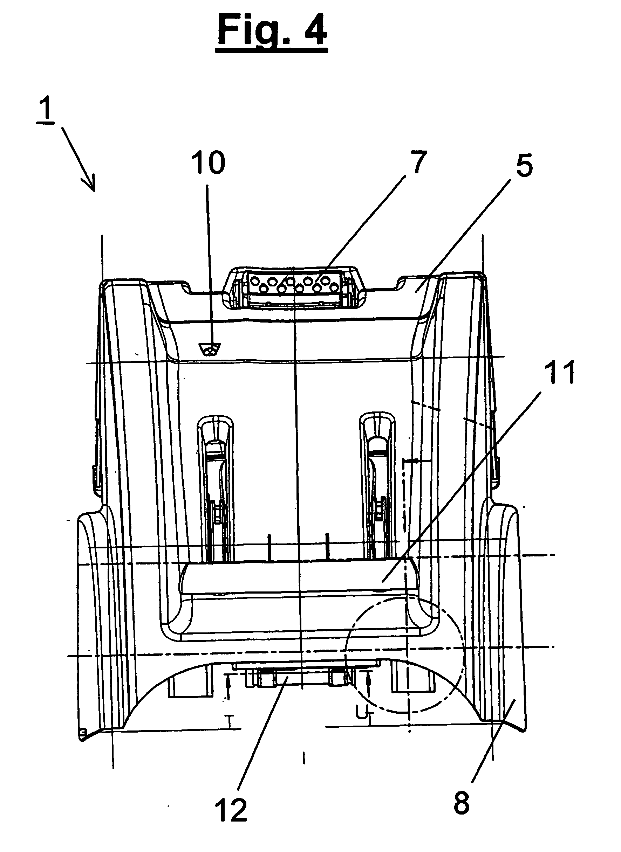

In Fig. 4 ist das in Fig. 3 dargestellte Trägersystem 1 in Vorderansicht dargestellt. Deutlich ist die in der oberen Abdeckung 5 erhöht ausgebildete elektr. Schnittstelle 7 zu erkennen, welche einen Stecker zum Anschluss einer mit einem korrespondierenden Stecker ausgerüsteten Zusatz-Innenausstattung aufweist. Im oberen Bereich der vorderen Abdeckung 8 ist die Öffnung 10 zur Führung einer Sicherheitseinrichtung (nicht dargestellt) erkennbar. Weiterhin sind in der vorderen Abdeckung 8 zwei Führungen zur Aufnahme eines Betätigungselements ausgebildet. Ansatzweise ist dargestellt, dass dieses Betätigungselement als Hebel 11 ausgebildet ist. Über den Hebel 11 lässt sich die untere Befestigungsvorrichtung 12 betätigen. Diese Befestigungsvorrichtung 12 stellt gleichzeitig eine mechanische Verbindung zu dem Kraftfahrzeug und eine mechanische Verbindung zu der Bordelektrik/-elektronik her.

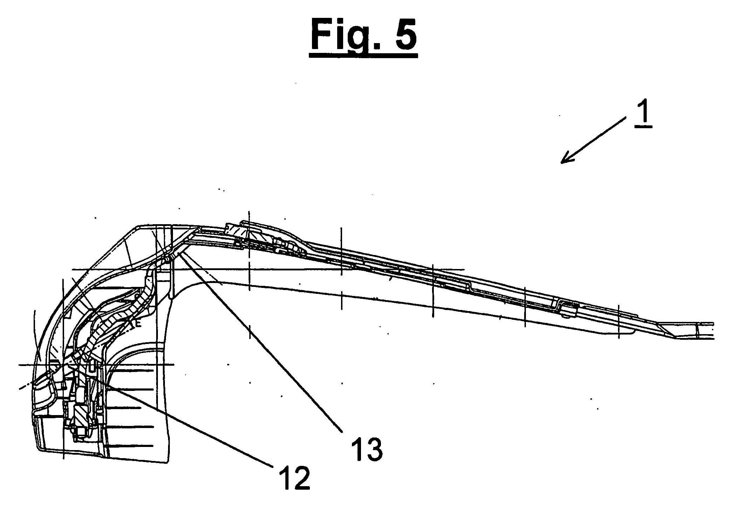

Fig. 5 zeigt einen Längsschnitt durch ein erfindungsgemäßes Trägersystem 1 in Seitenansicht. In dieser Ansicht ist die Anordnung des Kabelsatzes 13 des Trägersystems zur elektr. Versorgung sowie die Mechanik der unteren Befestigungsvorrichtung 12 dargestellt. Man erkennt deutlich, dass die Anordnung raumoptimiert angeordnet ist und somit wenig Bauraum benötigt, so dass ein kompaktes Trägersystem 1 realisierbar ist.

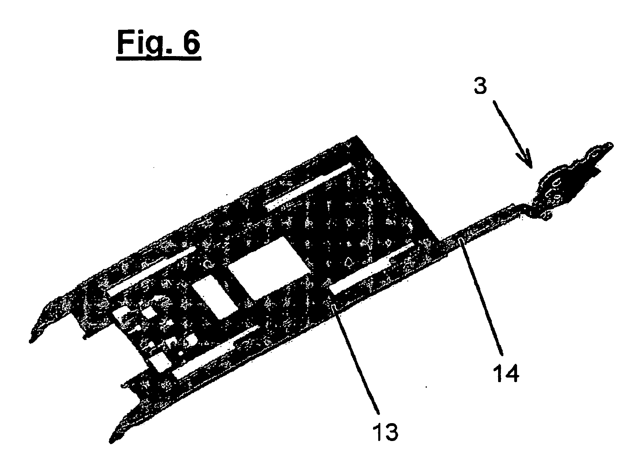

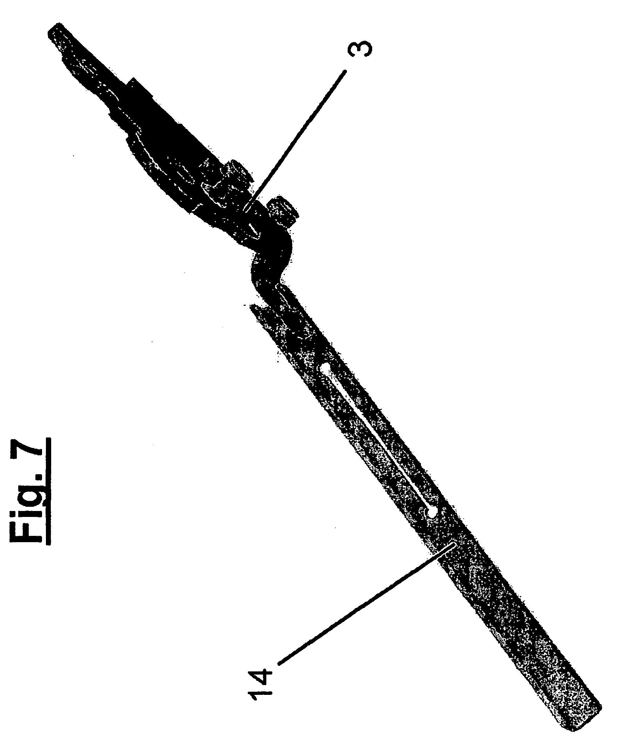

Fig. 6 zeigt in perspektivischer Darstellung einen Trägerrahmen 13, der mit einer Energieabsorptionseinrichtung 14 verbunden ist, an der eine hintere Befestigungsvorrichtung 3 angeordnet ist. Die Energieabsorptionseinrichtung 14, welche in Fig. 7 größer dargestellt ist, ist über eine Bolzenverbindung, welche den Endbereich des Schlitzes der Energieabsorptionseinrichtung 14 durchdringt, mit dem Trägerrahmen 13 verbunden. Bei Einleiten einer ausreichenden Energiemenge verschiebt sich der Trägerrahmen 13 relativ zur Energieabsorptionseinrichtung 14 und verformt diese plastisch, wodurch Energie absorbiert wird.

Fig. 7 zeigt die Energieabsorptionseinrichtung 14 deutlicher. Die Energieabsorptionseinrichtung 14 nach Fig. 7 ist als U-förmiges Profilblech ausgebildet, welches einen Schlitz aufweist, der jeweils an beiden Enden eine runde Öffnung aufweist, die zur Aufnahme eines Bolzen oder eines ähnlichen Körpers ausgebildet ist. An einem Ende des Profilblechs ist eine hintere Befestigungsvorrichtung 3 angeordnet und unlösbar mit dem Profilblech verbunden. Diese Anordnung wird mit dem Trägerrahmen (hier nicht dargestellt)verbunden und bildet so einen Teil des Trägersystems.

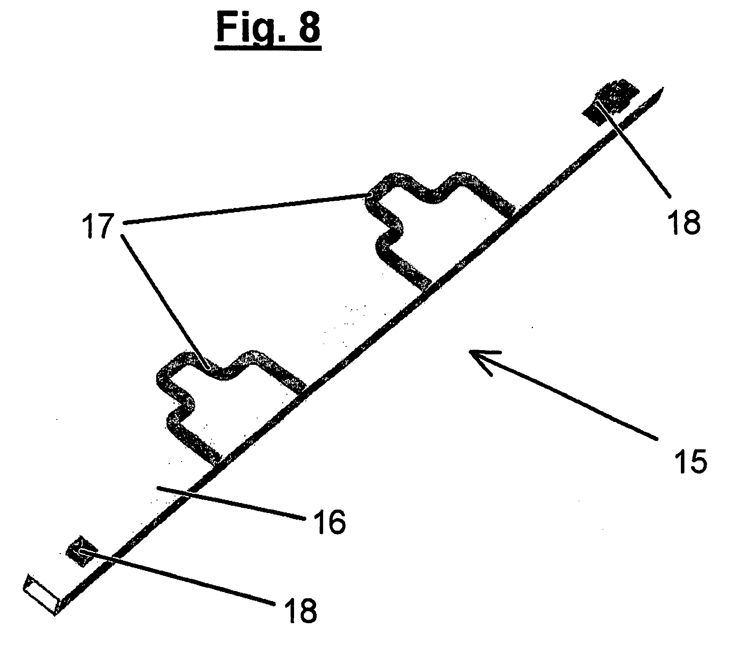

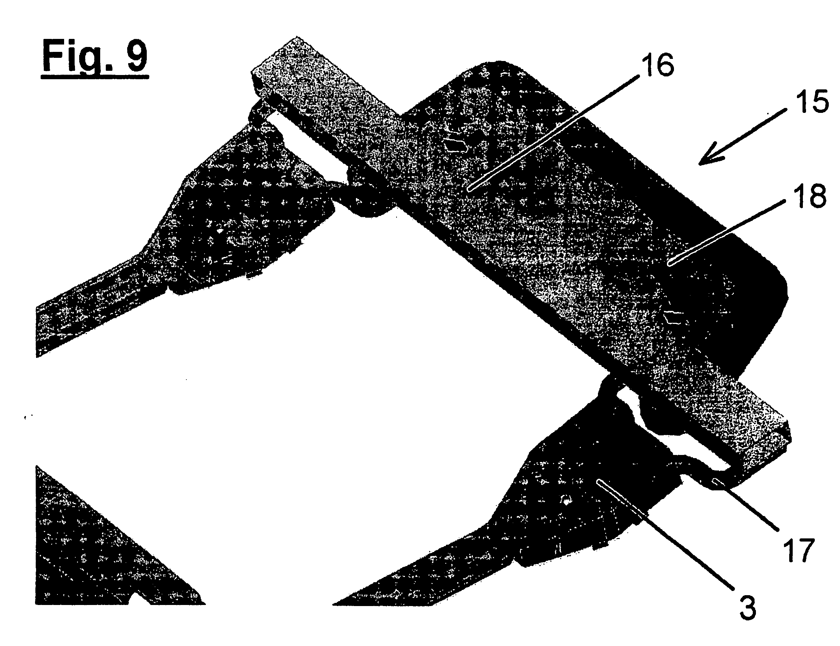

Fig. 8 zeigt in einer perspektivischen Darstellung einen zu einem erfindungsgemäßen Trägersystem gehörenden Adapter 15. Der Adapter 15 besteht aus einem als Vierkant-Profilrohr ausgebildeten Profilrahmen 16, an welchem zwei Laschen 17 zur Verbindung mit einer hinteren Befestigungsvorrichtung angeordnet sind. Zudem weist das Profilrohr zwei Verbindungsstücke 18 zur mechanischen Verbindung des Adapters 15 mit dem Kraftfahrzeug auf. Eine lösbare Verbindung eines Adapters 15 mit dem Kraftfahrzeug stellt Fig. 9 dar.

In Fig. 9 ist ein Ausschnitt eines Trägersystems in perspektivischer Darstellung gezeigt. Der Ausschnitt umfasst eine hintere Befestigungsvorrichtung 3 und einen Adapter 15, welche miteinander verbunden sind. Der Adapter 15 umfasst einen als Vierkantrohr ausgebildeten Profilrahmen 16, zwei Laschen 17, die an dem Vierkantrohr angeordnet sind und ein Verbindungsstück 18, welches als Blech ausgebildet ist, dass an dem Vierkantrohr angeordnet ist und zwei Öffnung für je eine Schraubenverbindung mit der Karosserie des Kraftfahrzeugs aufweist.

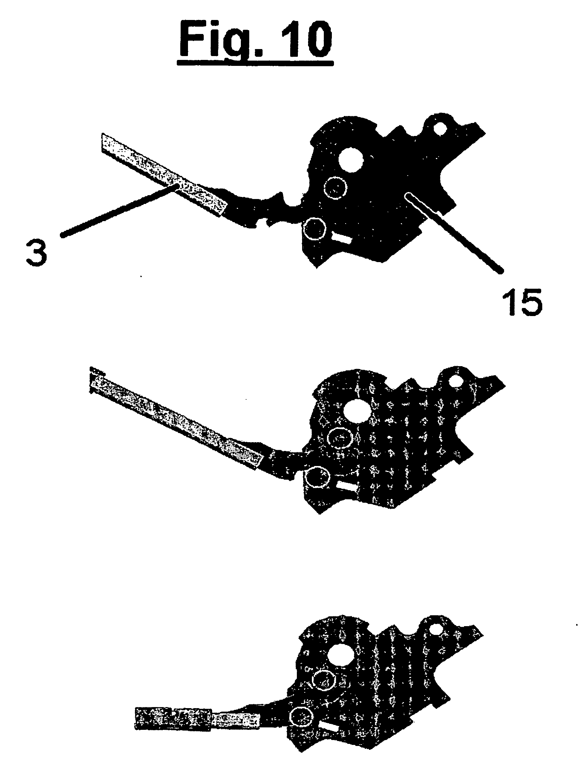

In Fig. 10 ist die Montage der hinteren Befestigung 3 des Trägersystems in drei Schritten dargestellt, wobei jeder Schritt in einer Unterfigur dargestellt ist. Die oberste erste Unterfigur zeigt die Befestigungsvorrichtung 3 in unmontierter Position. Die Befestigungsvorrichtung 3 wird winklig zu Sitzfläche auf einen ersten, unteren von zwei Bolzen eines mit dem Kraftfahrzeug oder dem Sitz verbundenen Adapters 15 aufgesetzt. In einem zweiten Schritt, dargestellt in der mittleren zweiten Unterfigur wird die hintere Befestigungsvorrichtung 3 in praktisch der gleichen Position wie in der ersten Unterfigur über den ersten unteren Bolzen zwischen erstem und zweitem Bolzen verschoben, bis die hintere Befestigungsvorrichtung 3 mit einem speziell ausgebildeten Anschlag an den ersten unteren Bolzen anstößt. Schließlich wird, wie in der untersten dritten Unterfigur dargestellt, die hintere Befestigungsvorrichtung 3 um den ersten, unteren Bolzen geschwenkt und von der winkligen Position in eine Endposition geschwenkt, welche im Wesentlichen parallel zur Sitzfläche eines mittleren Fondssitzes ist. Bei Demontage erfolgen die Schritte in umgekehrter Reihenfolge.

### Bezugszeichenliste

- **1**: Trägersystem
- **2**: obere Befestigungsvorrichtung
- **3**: hintere Befestigungsvorrichtung
- **4**: Auflagefläche
- **5**: obere Abdeckung
- **6**: Innenbereich
- **7**: elektrische/elektronische Schnittstelle
- **8**: vordere Abdeckung
- **9**: Sicherheitsvorrichtung
- **10**: Öffnung
- **11**: Hebel
- **12**: untere Befestigungsvorrichtung
- **13**: Trägerrahmen
- **14**: Energieabsorptionseinrichtung
- **15**: Adapter
- **16**: Profilrahmen
- **17**: Lasche
- **18**: Verbindungsstück

## Patentansprüche

1. Trägersystem (1) zur mechanischen Verbindung einer austauschbaren Zusatz-Innenausstattung, insbesondere einer Mittelkonsole, zum Einsatz in einem Kraftfahrzeug wobei das im Wesentlichen L-förmige Trägersystem (1) einen Trägerrahmen (13) umfaßt und mindestens über eine hintere Befestigungsvorrichtung (3) und mindestens über eine untere Befestigungsvorrichtung (12) lösbar mit dem Kraftfahrzeug und die Zusatz-Innenausstattung über die obere Befestigungsvorrichtung (2) mit dem Trägersystem (1) verbunden ist, **dadurch gekennzeichnet, dass** das Trägersystem (1) im Bereich zwischen den äußeren Fondsitzen schwebend angeordnet ist, und Befestigungsvorrichtungen (2,3) mit Mitteln gegen unautorisiertes Lösen umfaßt.

2. Trägersystem (1) nach Anspruch 1, **dadurch gekennzeichnet, dass** das Trägersystem (1) über der mittleren Sitzfläche angeordnet ist.

3. Trägersystem (1) nach Anspruch 1 oder 2, **dadurch gekennzeichnet, dass** das Trägersystem (1) anstelle des mittleren Sitzes angeordnet ist.

4. Trägersystem (1) nach einem der vorherigen Ansprüche, **dadurch gekennzeichnet, dass** das Trägersystem eine elektrische/elektronische Schnittstelle (7) zum Anschluss einer Zusatz-Innenausstattung an die Bordelektrik und/oder Bordelektronik des Kraftfahrzeugs aufweist.

5. Trägersystem (1) nach einem der vorherigen Ansprüche, **dadurch gekennzeichnet, dass** die elektrische/elektronische Schnittstelle (7) einen oberen und einen unteren Anschlussbereich aufweist, wobei der obere Bereich zur elektrischen/elektronische Verbindung der Schnittstelle (7) mit einer Zusatz-Innenausstattung ausgebildet ist und der untere Bereich zur bodennahen elektrischen/elektronischen Verbindung mit der Bordelektrik/Bordelektronik ausgebildet ist.

6. Trägersystem (1) nach einem der vorherigen Ansprüche, **dadurch gekennzeichnet, dass** das L-förmige Trägersystem (1) als liegendes "L" so in dem Kraftfahrzeug angeordnet ist, dass der kürzere Teil des Trägersystems (1) im Wesentlichen in Richtung Fahrzeugboden weist und der längere Teil des Trägersystems (1) im Wesentlichen parallel zur Sitzfläche der Fondssitze ausgerichtet ist.

7. Trägersystem (1) nach einem der vorherigen Ansprüche, **dadurch gekennzeichnet, dass** eine obere Abdeckung (5) zum Schutz und zur Begrenzung des Trägersystems (1) einen Randbereich und einen Innenbereich (6) aufweist, wobei zumindest der Randbereich als Auflagefläche (4) ausgebildet ist, in der die obere Befestigungsvorrichtung (2) zur mechanischen Befestigung einer Zusatz-Innenausstattung an dem Trägersystem (1) ausgebildet ist.

8. Trägersystem (1) nach einem der vorherigen Ansprüche, **dadurch gekennzeichnet, dass** die obere Befestigungsvorrichtung (2) auf einer Oberfläche des längeren Teils des Trägersystems (1) angeordnet ist, welche im Wesentlichen in Richtung Fahrzeugdach gerichtet ist.

9. Trägersystem (1) nach einem der vorherigen Ansprüche, **dadurch gekennzeichnet, dass** die untere Befestigungsvorrichtung (12) in einem Bereich des kürzeren Teils des Trägersystems (1) angeordnet ist, welcher im Wesentlichen benachbart zum Fahrzeugboden angeordnet ist.

10. Trägersystem (1) nach einem der vorherigen Ansprüche, **dadurch gekennzeichnet, dass** die hintere Befestigungsvorrichtung (3) in einem Bereich des längeren Teils des Trägersystems (1) angeordnet ist, welcher im Wesentlichen benachbart zur Rückenlehne der Fondsitze angeordnet ist.

11. Trägersystem (1) nach einem der vorherigen Ansprüche, **dadurch gekennzeichnet, dass** die obere Befestigungsvorrichtung (2) als mindestens eine Ausnehmung in der Auflagefläche (4) zur geführten Aufnahme der Zusatz-Innenausstattung ausgebildet ist, um mit der Ausnehmung korrespondierende Anbindungseinheiten der Zusatz-Innenausstattung aufzunehmen.

12. Trägersystem (1) nach Anspruch 11 **dadurch gekennzeichnet, dass** die Ausnehmung der Auflagefläche (4) als Schlitz ausgebildete ist, die in einem ersten Bereich breiter ausgebildet ist, und in einem zweiten Bereich schmaler ausgebildet ist, um eine Zusatz-Innenausstattung mittels vertikalem Aufsetzen und horizontalem Verschieben aufzunehmen.

13. Trägersystem (1) nach Anspruch 8 oder 12, **dadurch gekennzeichnet, dass** die obere Befestigungsvorrichtung (2) mindestens eine, bevorzugt zwei und besonders bevorzugt vier Ausnehmungen zur Aufnahme einer Zusatz-Innenausstattung aufweist.

14. Trägersystem (1) nach Anspruch 7, **dadurch gekennzeichnet, dass** der Innenbereich (6) der oberen Abdeckung (5) als Vertiefung ausgebildet ist, welche einen erhöhten Schnittstellenbereich aufweist, in dem eine elektrische/elektronische Schnittstelle (7) zur elektrischen und/oder elektronischen Verbindung der Zusatz-Innenausstattung mit der Bordelektrik und/oder Bordelektronik ausgebildet ist.

15. Trägersystem (1) nach einem der vorherigen Ansprüche 7 bis 14, **dadurch gekennzeichnet, dass** der durch den vertieften Innenbereich (6) und dem erhöhten Randbereich und/oder den erhöhten Schnittstellenbereich definierte Absatz mit einer entsprechenden Rastvorrichtung der Zusatz-Innenausstattung zusammenwirkt und als Sicherungseinheit gegen unautorisiertes Abnehmen der Zusatz-Innenausstattung von dem Trägersystem (1) fungiert.

16. Trägersystem (1) nach Anspruch 1, **dadurch gekennzeichnet, dass** die untere Befestigungsvorrichtung (3) auf den Bodenbereich eines Kraftfahrzeugs im Fußraum des Kraftfahrzeugfonds aufsetzbar ist und mit diesem über einen Hebelmechanismus verbindbar ist, so dass eine mechanische Verbindung und/oder eine Verbindung mit der Bordelektrik und/oder Bordelektronik zustande kommt.

17. Trägersystem (1) nach Anspruch 16, **dadurch gekennzeichnet, dass** der Bodenbereich eines Kraftfahrzeugs, auf dem die untere Befestigungsvorrichtung (3) aufsetzbar ist, ein Tunnelsystem eines Kraftfahrzeugs ist.

18. Trägersystem (1) nach einem der vorherigen Ansprüche, **dadurch gekennzeichnet, dass** die untere Befestigungsvorrichtung eine Sicherungsvorrichtung (9) aufweist, die ein unautorisiertes Lösen des Trägersystems (1) verhindert.

19. Trägersystem (1) nach Anspruch 14, **dadurch gekennzeichnet, dass** die Sicherungsvorrichtung (9) ein federndes Element umfasst, welches mit einer als Sperre ausgeformten Erhebung ausgebildet ist.

20. Trägersystem (1) nach Anspruch 1, **dadurch gekennzeichnet, dass** die hintere Befestigungsvorrichtung (3) über eine Einhakvorrichtung nach Art einer Schlossfalle mit seitlich an dem mittleren Fondsitz befindliche Bolzen verbindbar ist.

21. Trägersystem (1) nach Anspruch 16, **dadurch gekennzeichnet, dass** die hintere Befestigungsvorrichtung (3) mindestens zwei Lagerflächen zur Verbindung mit zwei Haltevorrichtungen aufweist, wobei die hintere Befestigungsvorrichtung (3) so ausgebildet ist, dass bei waagerechter Position des Trägersystems (1) die hintere Befestigungsvorrichtung (3) mit dem Kraftfahrzeug verbunden ist, und dass bei geneigter Position des Trägersystems (1) zur Sitzfläche das Trägersystem (1) lösbar ist.

22. Trägersystem (1) nach Anspruch 16 oder 17, **dadurch gekennzeichnet, dass** die hintere Befestigungsvorrichtung (3) mit dem Trägerrahmen (13) verbunden ist.

23. Trägersystem (1) nach einem der vorherigen Ansprüche 16 bis 18, **dadurch gekennzeichnet, dass** die hintere Befestigungsvorrichtung (3) über einen Adapter (15), welcher mit dem Kraftfahrzeug verbunden ist, lösbar verbindbar ist.

24. Trägersystem (1) nach Anspruch 23 , **dadurch gekennzeichnet, dass** der Adapter (15) mit der hinteren Befestigungsvorrichtung (3) nach Art eines Schnappschlosssystems ausbildet ist.

25. Trägersystem (1) nach Anspruch 23 oder 24, **dadurch gekennzeichnet, dass** der Adapter (15) mindestens einen Profilrahmen (16), mindestens eine Lasche (17) und mindestens ein Verbindungsstück (18) zur Verbindung des Adapters (15) mit dem Kraftfahrzeug insbesondere mit der Karosserie des Kraftfahrzeugs aufweist.

26. Trägersystem (1) nach Anspruch 25, **dadurch gekennzeichnet, dass** das Verbindungsstück (18) lösbar über eine Schraubenverbindung mit dem Kraftfahrzeug verbindbar ist.

27. Trägersystem (1) nach Anspruch 25 oder 26, **dadurch gekennzeichnet, dass** das Verbindungsstück (18) unlösbar über eine Umformverbindung mit dem Kraftfahrzeug verbindbar ist.

28. Trägersystem (1) nach einem der Ansprüche 25 bis 27, **dadurch gekennzeichnet, dass** das Verbindungsstück (18) unlösbar mit dem Kraftfahrzeug verschweißt ist.

29. Trägersystem (1) nach einem der vorherigen Ansprüche 16 bis 24, **dadurch gekennzeichnet, dass** die hintere Befestigungsvorrichtung (3) bei montiertem Trägersystem (1) in den zwischen einem unteren Bereich einer Polsterung einer Rückenlehne und einem hinteren Bereich einer Polsterung einer korrespondierenden Sitzfläche geformten Spalt ragt.

30. Trägersystem (1) nach Anspruch 1, **dadurch gekennzeichnet, dass** der Trägerrahmen (13) eine in den Trägerrahmen (13) integrierte Energieabsorptionseinrichtung (14) umfassend einen Profilrahmen mit einem deformierbaren Bereich aufweist, wobei die hintere Befestigungsvorrichtung (3) an der Energieabsorptionseinrichtung (14) angeordnet ist.

31. Trägersystem (1) nach Anspruch 30, **dadurch gekennzeichnet, dass** der deformierbare Bereich der Energieabsorptionseinrichtung (14) einen Schlitz mit einer größeren Ausnehmung am Schlitzende aufweist, wobei die größere Ausnehmung zur Aufnahme eines Bolzens ausgebildet ist.

32. Trägersystem (1) nach Anspruch 30 oder 31, **dadurch gekennzeichnet, dass** die Energieabsorptionseinrichtung (14) mit dem Trägerrahmen (13) über eine Bolzenverbindung verbunden ist, wobei der Bolzen in der größeren Ausnehmung des Schlitzes so angeordnet ist, dass bei einem Crash der Bolzen den Schlitz aufweitet und deformiert und somit die Energie des Crash absorbiert.

33. Trägersystem (1) nach einem der vorherigen Ansprüche 4 bis 5 oder 10 bis 12, **dadurch gekennzeichnet, dass** die elektr. Schnittstelle (7) elektrische Leitungen zur Verbindung der elektr. Schnittstelle (7) mit der Bordelektronik und/oder Bordelektrik aufweist.

34. Trägersystem (1) nach einem der vorherigen Ansprüche, **dadurch gekennzeichnet, dass** mindestens eine Abdeckung (5, 8) mit der Sitzfläche, der Rückenlehne und dem Tunnel des Kraftfahrzeuges abschließt.

35. Verfahren zur crash-sicheren Befestigung eines Trägersystems (1) nach einem der vorherigen Ansprüche 1 bis 34 mit einem Kraftfahrzeug und Verbinden des Trägersystems (1) mit einem vorhandenen Elektrik/Elektronik-System, umfassen die folgenden Schritte:
1. Positionieren einer hinteren Befestigungsvorrichtung (3) und Verbinden mit einem Adapter (15) und
2. Betätigen einer unteren Betätigungsvorrichtung (12) zur Verbindung mit einem Anschlussteil zur Kopplung an das Elektrik/Elektronik-System, insbesondere mit einem Kraftfahrzeug, bevorzugt mit einem Tunnelsystem eines Kraftfahrzeugs.

36. Verfahren nach Anspruch 35, **dadurch gekennzeichnet, dass** das Positionieren einer hinteren Befestigungsvorrichtung (3) und Verbinden mit einem Adapter (15) die folgenden Schritte umfasst:
1. Auflegen der hinteren Befestigungsvorrichtung (3) in winkliger Orientierung zu einer durch eine Sitzfläche eines Fondssitzes gebildeten im Wesentlichen horizontalen Ebene auf eine erste Befestigungseinheit eines Adapters,
2. Verschieben der hinteren Befestigungsvorrichtung (3) über die erste Befestigungseinheit bis zu einem Anschlag und
3. Verschwenken der hinteren Befestigungsvorrichtung (3) in eine im Wesentlichen horizontale Orientierung bis zu einem Anschlag.

37. Verfahren nach einem der Ansprüche 35 oder 36, **dadurch gekennzeichnet, dass** das Betätigen einer Betätigungsvorrichtung zur Befestigung einer unteren Befestigungsvorrichtung (12) die Schritte umfasst:
1. mechanische Verbindung und
2. elektrische/elektronische Verbindung an ein Tunnelsystem eines Kraftfahrzeuges, wobei die mechanische und die elektrische/elektronische Verbindung mit einem einzigen Betätigungsvorgang realisiert werden.

## Claims

1. Support system (1) for mechanically connecting a replaceable optional interior fitting, in particular a central control panel, for use in a motor vehicle, wherein the substantially L-shaped support system (1) comprises a support frame (13) and is connected to the motor vehicle in a releasable manner at least by means of one rear fastening device (3) and at least by means of one bottom fastening device (12), and the optional interior fitting is connected to the support system (1) by means of the top fastening device (2), **characterised in that** the support system (1) is disposed in a suspended manner in the region between the outer rear seats and comprises fastening devices (2, 3) with means against unauthorised release.

2. Support system (1) according to Claim 1, **characterised in that** the support system (1) is disposed above the central seating surface.

3. Support system (1) according to Claim 1 or 2, **characterised in that** the support system (1) replaces the central seat.

4. Support system (1) according to any one of the preceding Claims, **characterised in that** the support system has an electrical/electronic interface (7) for connecting an optional interior fitting to the on-board electrical system and/or on-board electronic system of the motor vehicle.

5. Support system (1) according to any one of the preceding Claims, **characterised in that** the electrical/electronic interface (7) has a top and a bottom connection region, wherein the top region is formed to electrically/electronically connect the interface (7) to an optional interior fitting, and the bottom region for a floor-level electrical/electronic connection to the on-board electrical system/on-board electronic system.

6. Support system (1) according to any one of the preceding Claims, **characterised in that** the L-shaped support system (1) is disposed as a recumbent "L" in the motor vehicle such that the shorter part of the support system (1) points substantially in the direction of the vehicle floor and the longer part of the support system (1) is oriented substantially parallel to the seating surface of the rear seats.

7. Support system (1) according to any one of the preceding Claims, **characterised in that** a top cover (5) for protecting and for bounding the support system (1) has an edge region and an inner region (6), wherein at least the edge region is formed as a supporting surface (4) in which the top fastening device (2) for mechanically fastening an optional interior fitting to the support system (1) is formed.

8. Support system (1) according to any one of the preceding Claims, **characterised in that** the top fastening device (2) is disposed on a surface of the longer part of the support system (1) which is directed substantially in the direction of the vehicle roof.

9. Support system (1) according to any one of the preceding Claims, **characterised in that** the bottom fastening device (12) is disposed in a region of the shorter part of the support system (1) which is disposed substantially adjacent to the vehicle floor.

10. Support system (1) according to any one of the preceding Claims, **characterised in that** the rear fastening device (3) is disposed in a region of the longer part of the support system (1) which is disposed substantially adjacent to the backrest of the rear seats.

11. Support system (1) according to any one of the preceding Claims, **characterised in that** the top fastening device (2) is formed as at least one recess in the supporting surface (4) for the guided accommodation of the optional interior fitting in order to accommodate linkage units, corresponding with the recess, of the optional interior fitting.

12. Support system (1) according to Claim 11, **characterised in that** the recess of the supporting surface (4) is formed as a slot which is wider in a first region and narrower in a second region in order to accommodate an optional interior fitting by means of vertical positioning and horizontal displacement.

13. Support system (1) according to Claim 8 or 12, **characterised in that** the top fastening device (2) has at least one, preferably two and particularly preferably four recess(es) for accommodating an optional interior fitting.

14. Support system (1) according to Claim 7, **characterised in that** the inner region (6) of the top cover (5) is formed as a recess which has a raised interface region in which there is formed an electrical/electronic interface (7) for electrically and/or electronically connecting the optional interior fitting to the on-board electrical system and/or on-board electronic system.

15. Support system (1) according to any one of the preceding Claims, **characterised in that** the shoulder which is defined by the recessed inner region (6) and the raised edge region and/or the raised interface region co-operates with a corresponding locking device of the optional interior fitting and functions as a security unit against unauthorised removal of the optional interior fitting from the support system (1).

16. Support system (1) according to Claim 1, **characterised in that** the bottom fastening device (3) can be positioned on the floor region of a motor vehicle in the foot well of the motor vehicle rear and connected to this by means of a lever mechanism, so that a mechanical connection and/or a connection to the on-board electrical system and/or on-board electronic system is effected.

17. Support system (1) according to Claim 16, **characterised in that** the floor region of a motor vehicle on which the bottom fastening device (3) can be positioned is a tunnel system of a motor vehicle.

18. Support system (1) according to any one of the preceding Claims, **characterised in that** the bottom fastening device has a security device (9) which prevents unauthorised release of the support system (1).

19. Support system (1) according to Claim 14, **characterised in that** the security device (9) comprises a resilient element which is formed with a raised portion shaped as a barrier.

20. Support system (1) according to Claim 1, **characterised in that** the rear fastening device (3) can be connected to bolts located laterally at the central rear seat by means of a hook-in device like a latch.

21. Support system (1) according to Claim 16, **characterised in that** the rear fastening device (3) has at least two bearing surfaces for connection to two retaining devices, wherein the rear fastening device (3) is formed such that the rear fastening device (3) is connected to the motor vehicle when the support system (1) is in a horizontal position, and that the support system (1) can be released when the support system (1) is in an inclined position relative to the seating surface.

22. Support system (1) according to Claim 16 or 17, **characterised in that** the rear fastening device (3) is connected to the support frame (13).

23. Support system (1) according to any one of the preceding Claims 16 to 18, **characterised in that** the rear fastening device (3) can be connected in a releasable manner by means of an adapter (15), which is connected to the motor vehicle.

24. Support system (1) according to Claim 23, **characterised in that** the adapter (15) with the rear fastening device (3) is formed like a snap-lock system.

25. Support system (1) according to Claim 23 or 24, **characterised in that** the adapter (15) has at least one sectional frame (16), at least one strap (17) and at least one connecting piece (18) for connecting the adapter (15) to the motor vehicle, in particular to the body of the motor vehicle.

26. Support system (1) according to Claim 25, **characterised in that** the connecting piece (18) can be connected to the motor vehicle in a releasable manner by means of a screwed connection.

27. Support system (1) according to Claim 25 or 26, **characterised in that** the connecting piece (18) can be non-releasably connected to the motor vehicle by means of a deformation connection.

28. Support system (1) according to any one of Claims 25 to 27, **characterised in that** the connecting piece (18) is non-releasably welded to the motor vehicle.

29. Support system (1) according to any one of the preceding Claims 16 to 24, **characterised in that** the rear fastening device (3) projects into the gap which is formed between a bottom region of the upholstery of a backrest and a rear region of the upholstery of a corresponding seating surface when the carrier system (1) is mounted.

30. Support system (1) according to Claim 1, **characterised in that** the support frame (13) has an energy absorption device (14) which is integrated into the support frame (13) and comprises a sectional frame with a deformable region, wherein the rear fastening device (3) is disposed at the energy absorption device (14).

31. Support system (1) according to Claim 30, **characterised in that** the deformable region of the energy absorption device (14) has a slot with a larger recess at the slot end, wherein the larger recess is formed to accommodate a bolt.

32. Support system (1) according to Claim 30 or 31, **characterised in that** the energy absorption device (14) is connected to the support frame (13) by means of a bolted connection, wherein the bolt is disposed in the larger recess of the slot such that the bolt widens and deforms the slot in the event of a crash and therefore absorbs the energy of the crash.

33. Support system (1) according to any one of the preceding Claims 4 to 5 or 10 to 12, **characterised in that** the electrical/electronic interface (7) has electrical lines for connecting the electrical/electronic interface (7) to the on-board electronic system and/or on-board electrical system.

34. Support system (1) according to any one of the preceding Claims, **characterised in that** at least one cover (5, 8) is flush with the seating surface, the backrest and the tunnel of the motor vehicle.

35. Method for fastening a support system (1) according to any one of the preceding Claims 1 to 34 to a motor vehicle in a crash-safe manner and connecting the support system (1) to an existing electrical/electronic system, comprising the following steps:
1. positioning a rear fastening device (3) and connecting it to an adapter (15) and
2. actuating a bottom actuating device (12) for connection to a connection part for coupling to the electrical/electronic system, in particular for connection to a motor vehicle, preferably to a tunnel system of a motor vehicle.

36. Method according to Claim 35, **characterised in that** the positioning of a rear fastening device (3) and connection to an adapter (15) comprises the following steps:
1. placing the rear fastening device (3) on a first fastening unit of an adapter at an angular orientation to a substantially horizontal plane formed by a seating surface of a rear seat,
2. displacing the rear fastening device (3) beyond the first fastening unit up to a stop and
3. pivoting the rear fastening device (3) into a substantially horizontal orientation up to a stop.

37. Method according to either of Claims 35 and 36, **characterised in that** the actuation of an actuating device for fastening a bottom fastening device (12) comprises the steps:
1. mechanical connection and
2. electrical/electronic connection to a tunnel system of a motor vehicle,
wherein the mechanical and the electrical/electronic connection are achieved by means of a single actuating operation.

## Revendications

1. Système de support (1) pour la liaison mécanique d'un équipement intérieur supplémentaire, en particulier d'une console centrale, pour une utilisation dans un véhicule automobile, le système de support (1) sensiblement en L comprenant un cadre support (13) et étant relié au moins par un dispositif de fixation (3) arrière et au moins par un dispositif de fixation (12) inférieur de façon amovible au véhicule et l'équipement intérieur supplémentaire étant relié par le dispositif de fixation (2) supérieur au système de support (1), **caractérisé en ce que** le système de support (1) est disposé de façon flottante dans la zone située entre les sièges arrière extérieurs et comprend des dispositifs de fixation (2, 3) avec des moyens contre un détachement non autorisé.

2. Système de support (1) selon la revendication 1, **caractérisé en ce que** le système de support (1) est disposé au-dessus de l'assise centrale.

3. Système de support (1) selon la revendication 1 ou 2, **caractérisé en ce que** le système de support (1) est disposé à la place du siège central.

4. Système de support (1) selon l'une quelconque des revendications précédentes, **caractérisé en ce que** le système de support présente une interface (7) électrique/électronique pour le raccordement d'un équipement intérieur supplémentaire à l'équipement électrique de bord et/ou l'électronique de bord du véhicule.

5. Système de support (1) selon l'une quelconque des revendications précédentes, **caractérisé en ce que** l'interface (7) électrique/électronique présente une zone de raccordement supérieure et une zone de raccordement inférieure, la zone supérieure étant réalisée pour la liaison électrique/électronique de l'interface (7) avec un équipement intérieur supplémentaire et la zone inférieure étant réalisée pour la liaison électrique/électronique à proximité du plancher avec l'équipement électrique/électronique de bord.

6. Système de support (1) selon l'une quelconque des revendications précédentes, **caractérisé en ce que** le système de support (1) en L est disposé sous la forme de "L" couché dans le véhicule de telle sorte que la partie plus courte du système de support (1) est dirigée essentiellement dans le sens du plancher de véhicule et la partie plus longue du système de support (1) est orientée sensiblement parallèlement à l'assise des sièges arrière.

7. Système de support (1) selon l'une quelconque des revendications précédentes, **caractérisé en ce qu'**un revêtement (5) supérieur présente pour la protection et pour la délimitation du système de support (1) une zone périphérique et une zone intérieure (6), au moins la zone périphérique étant conçue comme surface d'appui (4), dans laquelle le dispositif de fixation (2) supérieur est réalisé pour la fixation mécanique d'un équipement intérieur supplémentaire sur le système de support (1).

8. Système de support (1) selon l'une quelconque des revendications précédentes, **caractérisé en ce que** le dispositif de fixation (2) supérieur est disposé sur une surface de la partie plus longue du système de support (1), laquelle étant montée sensiblement dans le sens du toit du véhicule.

9. Système de support (1) selon l'une quelconque des revendications précédentes, **caractérisé en ce que** le dispositif de fixation (12) inférieur est disposé dans une plage de la partie la plus courte du système de support (1), laquelle est disposée sensiblement à proximité du plancher du véhicule.

10. Système de support (1) selon l'une quelconque des revendications précédentes, **caractérisé en ce que** le dispositif de fixation (3) arrière est disposé dans une zone de la partie plus longue du système de support (1) qui est disposée sensiblement à proximité du dossier des sièges arrière.

11. Système de support (1) selon l'une quelconque des revendications précédentes, **caractérisé en ce que** le dispositif de fixation (2) supérieure est conçu comme au moins un évidement dans la surface d'appui (4) pour le logement guidé de l'équipement intérieur supplémentaire, afin de recevoir des unités de rattachement correspondant à l'évidement de l'équipement intérieur supplémentaire.

12. Système de support (1) selon la revendication 11, **caractérisé en ce que** l'évidement de la surface d'appui (4) est réalisé comme fente, qui est conçue plus large dans une première zone et est conçue plus étroite dans une seconde zone, afin de recevoir un équipement intérieur supplémentaire au moyen d'une pose verticale et d'un déplacement horizontal.

13. Système de support (1) selon la revendication 8 ou 12, **caractérisé en ce que** le dispositif de fixation (2) supérieur présente au moins un, de préférence deux et en particulier de préférence quatre évidements pour le logement d'un équipement intérieur supplémentaire.

14. Système de support (1) selon la revendication 7, **caractérisé en ce que** la zone intérieure (6) du revêtement (5) supérieur est conçue comme cavité, qui présente une zone d'interface surélevée, dans laquelle est réalisée une interface (7) électrique/électronique pour la liaison électrique et/ou électronique de l'équipement intérieur supplémentaire avec l'équipement électrique de bord et/ou l'électronique de bord.

15. Système de support (1) selon l'une quelconque des revendications précédentes 7 à 14, **caractérisé en ce que** le décrochement défini par la zone intérieure (6) creuse et la zone périphérique surélevée et/ou la zone d'interface surélevée coopère avec un dispositif d'encliquetage approprié de l'équipement intérieur supplémentaire et fait office d'unité de sécurité contre un enlèvement non autorisé de l'équipement intérieur supplémentaire du système de support (1).

16. Système de support (1) selon la revendication 1, **caractérisé en ce que** le dispositif de fixation (3) inférieure peut être posé sur la zone de plancher d'un véhicule automobile dans l'espace pour les pieds de l'arrière du véhicule et peut être relié avec celle-ci par un mécanisme à levier, de sorte qu'on obtient une liaison mécanique et/ou une liaison avec l'équipement électrique de bord et/ou l'électronique de bord.

17. Système de support (1) selon la revendication 16, **caractérisé en ce que** la zone de plancher d'un véhicule automobile, sur laquelle le dispositif de fixation (3) inférieur peut être posé, est un système de tunnel d'un véhicule automobile.

18. Système de support (1) selon l'une quelconque des revendications précédentes, **caractérisé en ce que** le dispositif de fixation inférieur présente un dispositif de sécurité (9) qui empêche un détachement non autorisé du système de support (1).

19. Système de support (1) selon la revendication 14, **caractérisé en ce que** le dispositif de sécurité (9) comprend un élément élastique qui est conçu avec une éminence formée comme dispositif de blocage.

20. Système de support (1) selon la revendication 1, **caractérisé en ce que** le dispositif de fixation (3) arrière peut être relié par un dispositif d'accrochage à la façon d'un loquet de serrure avec des boulons se trouvant sur le côté sur le siège arrière central.

21. Système de support (1) selon la revendication 16, **caractérisé en ce que** le dispositif de fixation (3) arrière présente au moins deux faces de palier pour la liaison avec deux dispositifs de retenue, le dispositif de fixation (3) arrière étant conçu de telle sorte que, lorsque le système de support (1) est en position horizontale, le dispositif de fixation (3) arrière est relié au véhicule et que, lorsque le système de support (1) est en position inclinée, il est détachable par rapport à l'assise du système de support (1).

22. Système de support (1) selon la revendication 16 ou 17, **caractérisé en ce que** le dispositif de fixation (3) arrière est relié au cadre support (13).

23. Système de support (1) selon l'une quelconque des revendications précédentes 16 à 18, **caractérisé en ce que** le dispositif de fixation (3) arrière peut être relié de façon amovible au moyen d'un adaptateur (15) qui est relié au véhicule.

24. Système de support (1) selon la revendication 23, **caractérisé en ce que** l'adaptateur (15) est conçu avec le dispositif de fixation (3) arrière à la façon d'un système de serrure à encliquetage.

25. Système de support (1) selon la revendication 23 ou 24, **caractérisé en ce que** l'adaptateur (15) présente au moins un cadre profilé (16), au moins une patte (17) et au moins une pièce de liaison (18) pour la liaison de l'adaptateur (15) avec le véhicule en particulier avec la carrosserie du véhicule.

26. Système de support (1) selon la revendication 25, **caractérisé en ce que** la pièce de liaison (18) peut être reliée de façon amovible au moyen d'un assemblage à vis au véhicule.

27. Système de support (1) selon la revendication 25 ou 26, **caractérisé en ce que** la pièce de liaison (18) peut être reliée de façon inamovible par une liaison formée au véhicule.

28. Système de support (1) selon l'une quelconque des revendications 25 à 27, **caractérisé en ce que** la pièce de liaison (18) est soudée de façon inamovible au véhicule.

29. Système de support (1) selon l'une quelconque des revendications précédentes 16 à 24, **caractérisé en ce que** le dispositif de fixation (3) arrière dépasse, lorsque le système de support (1) est monté, dans la fente formée entre une zone inférieure d'un rembourrage de dossier et une zone arrière d'un rembourrage d'une assise correspondante.

30. Système de support (1) selon la revendication 1, **caractérisé en ce que** le cadre support (13) présente un dispositif d'absorption d'énergie (14) intégré dans le cadre support (13) comprenant un cadre profilé avec une zone déformable, le dispositif de fixation (3) arrière étant disposé sur le dispositif d'absorption d'énergie (14).

31. Système de support (1) selon la revendication 30, **caractérisé en ce que** la zone déformable du dispositif d'absorption d'énergie (14) présente une fente avec un évidement assez grand sur l'extrémité de la fente, l'évidement plus grand étant réalisé pour le logement d'un boulon.

32. Système de support (1) selon la revendication 30 ou 31, **caractérisé en ce que** le dispositif d'absorption d'énergie (14) est relié au cadre support (13) par un assemblage à boulon, le boulon étant disposé dans l'évidement plus grand de la fente de telle sorte que, lors d'une collision, le boulon élargit et déforme la fente et absorbe ainsi l'énergie de la collision.

33. Système de support (1) selon l'une quelconque des revendications précédentes 4 à 5 ou 10 à 12, **caractérisé en ce que** l'interface (7) électrique présente des lignes électriques pour la liaison de l'interface (7) électrique avec l'électronique de bord et/ou l'équipement électrique de bord.

34. Système de support (1) selon l'une quelconque des revendications précédentes, **caractérisé en ce qu'**au moins un revêtement (5, 8) se termine avec l'assise, le dossier et le tunnel du véhicule.

35. Procédé pour la fixation, protégée en cas de collision, d'un système de support (1) selon l'une quelconque des revendications 1 à 34 précédentes avec un véhicule automobile et la liaison du système de support (1) avec un système équipement électrique/électronique présent, comprenant les étapes suivantes :
1. Positionnement d'un dispositif de fixation (3) arrière et liaison avec un adaptateur (15) et
2. Actionnement d'un dispositif d'actionnement (12) inférieur pour la liaison avec une partie de raccordement pour le couplage au système d'équipement électrique/électronique, en particulier avec un véhicule automobile, de préférence avec un système de tunnel d'un véhicule.

36. Procédé selon la revendication 35, **caractérisé en ce que** le positionnement d'un dispositif de fixation (3) arrière et la liaison avec un adaptateur (15) comprend les étapes suivantes :
1. Pose du dispositif de fixation (3) arrière dans une orientation en angle par rapport à un plan sensiblement horizontal et formée par une assise d'un siège arrière sur une première unité de fixation d'un adaptateur,
2. déplacement du dispositif de fixation (3) arrière au moyen de la première unité de fixation jusqu'à une butée et
3. basculement du dispositif de fixation (3) arrière dans une orientation sensiblement horizontale jusqu'à une butée.

37. Procédé selon l'une quelconque des revendications 35 ou 36, **caractérisé en ce que** l'actionnement d'un dispositif d'actionnement pour la fixation d'un dispositif de fixation (12) arrière comprend les étapes suivantes :
1. liaison mécanique et
2. liaison électrique/électronique à un système de tunnel d'un véhicule automobile,
la liaison mécanique et la liaison électrique/électronique étant réalisées avec une seule opération d'actionnement.
